# EUROPÄISCHE PATENTANMELDUNG

(11) **EP 1 750 117 A2**
(43) Veröffentlichungstag der Anmeldung: **07.02.2007**
(21) Anmeldenummer: 06014998.6
(22) Anmeldetag: 19.07.2006
(51) Int. Cl.: G01N 21/90, G01N 21/33

(54) **Vorrichtung und Verfahren zum Erkennen von Flascheneigenschaften**

(30) Priorität: 02.08.2005 DE 102005036796
(71) Anmelder: KRONES AG, 93073 Neutraubling (DE)
(72) Erfinder: Kwirandt, Rainer, Dr., 93092 Barbing (DE)

(57) **Zusammenfassung**

Die Erfindung betrifft eine Vorrichtung und ein Verfahren zum Erkennen von Flascheneigenschaften durch Bestrahlen von Glasflaschen und Auffangen der von Glasflaschen ausgehenden Strahlung, wobei Glasflaschen mit UV-Strahlung beaufschlagt werden.

## Beschreibung

Die Erfindung betrifft eine Vorrichtung und ein Verfahren zum Erkennen von Flascheneigenschaften gemäß dem Oberbegriff des Anspruchs 1 bzw. 6.

Glasflaschen für Getränke wie Bier, Limonaden, Säfte oder dgl. können einen UV-Schutz aufweisen, um ein vorzeitiges Verderben der Getränke durch den UV-Lichtanteil zu verhindern. Diese transparenten, zumeist farblosen Flaschen sind beispielsweise mit einem Vanadiumzusatz versehen.

Problematisch ist eine Unterscheidung dieser speziellen Glasflaschen von herkömmlichen Flaschen gleicher Form und Farbe, die keinen UV-Schutz besitzen und für diesbezüglich unempfindliche Getränke wie Wasser zum Einsatz kommen. In die Abfüllbetriebe kommen die durch bloße Inaugenscheinnahme äußerlich kaum zu unterscheidenden Flaschen vom Verbraucher häufig gemischt zurück, sollten aber nur für die jeweils vorgesehenen Getränke verwendet werden, d.h. spätestens vor dem Befüllen ist eine Flaschensortierung notwendig.

Demzufolge liegt der Erfindung die Aufgabe zugrunde, eine Vorrichtung und ein Verfahren zur Erkennung von einen UV-Schutz aufweisenden Flaschen anzugeben.

Gelöst wird die Aufgabe durch die kennzeichnenden Merkmale des Anspruchs 1 bzw. 6.

Zur Unterscheidung von konventionellen Flaschen von UV-Schutz-Flaschen wird die überraschende Erkenntnis genutzt, dass die einen UV-Schutz aufweisenden Flaschen bei Bestrahlung mit ultraviolettem Licht dieses absorbieren und einen Großteil davon wieder als sichtbares Fluoreszenzlicht abstrahlen. Bei Betrachten einer mit UV-Licht bestrahlten UV-Schutz-Flasche mit einem für sichtbares Licht geeigneten Sensor, z.B. einer CCD-Kamera, kann das Fluoreszenzlicht der leuchtenden Flasche aufgefangen und nachgewiesen werden. Herkömmliche Glasflaschen liefern dagegen bei einer UV-Beleuchtung ein dunkles Bild.

Zur Sortierung wird dann vom Sensor und seiner zugeordneten Auswerteinrichtung ein Signal erzeugt, mit dem eine Auswurf-oder Sortiereinrichtung zum Separieren der Flaschen entsprechend ihren festgestellten Eigenschaften ansteuerbar ist.

Günstig ist eine Beleuchtung der offenen Flaschenmündung von schräg oben mit UV-Licht, weil hier die Wandstärke verhältnismäßig groß ist und dieser Bereich deshalb besonders hell leuchtet. Zur Beleuchtung ist eine ringförmig ausgebildete UV-Lichtquelle von Vorteil, denn der Mündungsbereich einer darunter konzentrisch positionierten, schräg von außen bestrahlten Flasche kann dann durch die mittige Öffnung der Lichtquelle hindurch von einer Kamera oder einem anderen Sensor aufgenommen werden. Zur Unterdrückung von UV-Restlichtanteilen kann der Kamera ein UV-Filter vorgeordnet sein.

Die genannte Anordnung kann beispielsweise über einem Flaschen kontinuierlich stehend transportierenden Förderband oder über einem seitlich an den Flaschen angreifenden Klemmriemenförderer stationär positioniert sein, beispielsweise innerhalb einer Flascheninspektionsmaschine entsprechend EP 1 130 384 B1, EP 0 950 181 B1 oder EP 0 820 584 B1. Der Flaschentransport kann aber auch mit Greifklammern erfolgen entsprechend EP 0 894 544 B1.

Als UV-Lichtquelle ist vorzugsweise ein ringförmiger Leuchtkörper geeignet. Er kann beispielsweise aus einem mit einer Vielzahl von LEDs bestückten Tragkörper gebildet werden. Der Tragkörper kann bevorzugt eine näherungsweise konische Form aufweisen, entsprechend der Darstellung in DE 199 20 007 C1, wobei die LEDs an der Innenfläche angeordnet sind. Eine kugelabschnittsförmige Ausgestaltung ist gleichfalls geeignet.

Wenn sich die mit einem UV-Schutz versehenen Flaschen in Bezug auf ihre Oberflächenbeschaffenheit unterscheiden sollten, z.B. durch erhaben ausgebildete Glasprägungen am Schulterbereich oder glatte Schulterflächen, ist ggf. zugleich eine Differenzierung dieser Flaschen untereinander möglich, weil Prägungen durch Lichtaustritt des in die Flaschenwandung eingekoppelten Lichts in der aufgenommenen Abbildung hell erscheinen und durch eine Bildauswertung ermittelt werden können. Hierzu erfasst die Kamera zweckmäßigerweise auch den Schulterbereich sowie ggf. den übrigen Mantelbereich einer Flasche.

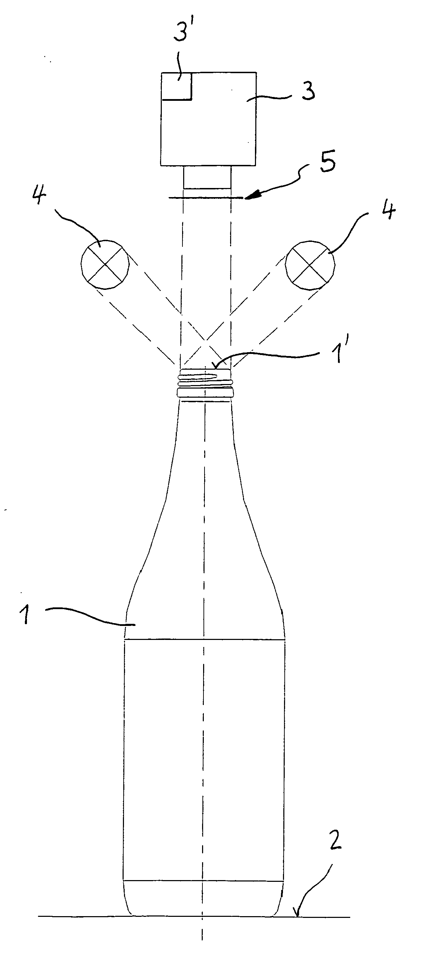

Aus der einzigen Figur ist die prinzipielle Anordnung in einer Seitenansicht erkennbar. Transparente, farblose Glasflaschen 1 werden in einer einspurigen Reihe auf einem Förderband 2 stehend kontinuierlich mit ihrer oben offenen Mündung 1' unter einer mittig über dem Förderband stationär angeordneten, senkrecht nach unten blickenden CCD-Kamera 3 vorbeigeführt und von einer zur Kamera konzentrisch ausgerichteten ringförmigen UV-Lichtquelle 4 von oben und schräg außen im Wesentlichen auf den Mündungsbereich konzentriert beleuchtet.

Wenn die Flaschenhochachse zumindest annähernd zur optischen Achse der Kamera 3 fluchtend ausgerichtet ist, erfolgt die Bildaufnahme, beispielsweise ausgelöst durch eine nicht dargestellte Triggerlichtschranke.

Durch ein der Kamera vorgeordnetes UV-Filter 5 können UV-Lichtanteile weitgehend eliminiert werden, d.h. nur sichtbares Licht gelangt in die Kamera. Bei UV-Schutz-Flaschen entsteht dieses Licht durch Fluoreszenz im Flaschenmaterial, d.h. die Flasche selbst wird zum sichtbaren Lichtstrahler und liefert eine helle Abbildung des Mündungsbereiches. Besteht eine bestrahlte Flasche dagegen aus einem herkömmlichen Glasmaterial, tritt dieser Effekt nicht auf und der Mündungsbereich bleibt dunkel.

Mit Hilfe einer der Kamera zugeordneten Bildauswerteinrichtung 3' können helle und dunkle Mündungsabbildungen problemlos voneinander unterschieden werden. Ferner sind in den Abbildungen hell erscheinende Glasprägungen an W-Schutz-Flaschen erkennbar. In Abhängigkeit des Auswertergebnisses kann ein Signal erzeugt werden, um eine Trennung der verschiedenen Flaschen durch Ansteuerung einer Flaschensortiereinrichtung oder Auswerfvorrichtung herbeizuführen. Die Signalerzeugung kann wahlweise erfolgen, wenn Licht oder kein Licht in der Abbildung erkannt wird.

## Patentansprüche

1. Vorrichtung zum Erkennen von Flascheneigenschaften mit einer auf eine Glasflasche (1) gerichteten Strahlungsquelle (4) und einem von der Glasflasche ausgehende Strahlung auffangenden Sensor (3), **dadurch gekennzeichnet, dass** die Strahlungsquelle ein UV-Strahler ist.

2. Vorrichtung nach Anspruch 1, **dadurch gekennzeichnet, dass** der Sensor (3) zum Detektieren von Strahlung im sichtbaren Spektrum ausgebildet ist.

3. Vorrichtung nach Anspruch 1 oder 2, **dadurch gekennzeichnet, dass** der Sensor (3) eine CCD-Kamera ist.

4. Vorrichtung nach wenigstens einem der Ansprüche 1 bis 3, **dadurch gekennzeichnet, dass** der UV-Strahler (4) wenigstens den Mündungsbereich (1') einer Glasflasche (1) beaufschlagt und der Sensor (3) wenigstens vom Mündungsbereich (1') ausgehendes Licht auffängt und wahlweise ein Signal erzeugt, wenn Licht oder kein Licht detektiert wird.

5. Vorrichtung nach wenigstens einem der Ansprüche 1 bis 4, dass dem Sensor (3) ein UV-Filter (5) vorgeordnet ist.

6. Verfahren zum Erkennen von Flascheneigenschaften durch Bestrahlen einer Glasflasche und Auffangen der von der Glasflasche ausgehenden Strahlung, **dadurch gekennzeichnet, dass** eine Glasflasche mit UV-Strahlung beaufschlagt wird.

7. Verfahren nach Anspruch 6, **dadurch gekennzeichnet, dass** bei Auffangen von sichtbarem Licht ein Signal erzeugt wird.

8. Verfahren nach Anspruch 6 und 7, **dadurch gekennzeichnet, dass** wenigstens der Mündungsbereich einer Glasflasche mit UV-Strahlung beaufschlagt und wenigstens vom Mündungsbereich ausgehendes sichtbares Licht erfasst wird.

9. Verfahren nach wenigstens einem der Ansprüche 6 bis 8, **dadurch gekennzeichnet, dass** aus der Flaschenschulter- oder -mantelfläche austretendes sichtbares Licht erfasst und ein Signal erzeugt wird.
